# EUROPÄISCHE PATENTSCHRIFT

(11) **EP 2 678 201 B1**
(45) Veröffentlichungstag und Bekanntmachung des Hinweises auf die Patenterteilung: **03.12.2014**
(21) Anmeldenummer: 12705289.2
(22) Anmeldetag: 21.02.2012
(51) Int. Cl.: B60T 8/34, B60T 8/48

(54) **ANTRIEBSSCHLUPFGEREGELTE BREMSANLAGE EINES HALTESTELLEN ANFAHRENDEN KRAFTFAHRZEUGS**
TRACTION-CONTROLLED BRAKE SYSTEM OF A MOTOR VEHICLE WHICH DRIVES TO STOPPING POINTS
SYSTÈME DE FREINAGE À RÉGULATION ANTI-PATINAGE POUR UN VÉHICULE AUTOMOBILE APPROCHANT UN POINT D'ARRÊT

(30) Priorität: 24.02.2011 DE 102011012270
(43) Veröffentlichungstag der Anmeldung: 01.01.2014
(73) Patentinhaber: KNORR-BREMSE Systeme für Nutzfahrzeuge GmbH, 80809 München (DE)
(72) Erfinder: WIEDER, Gerhard, 74354 Besigheim (DE); HOLOBRADI, Peter, H-2040 Budaörs (HU)
(86) Internationale Anmeldenummer: PCT/EP2012/052898
(87) Internationale Veröffentlichungsnummer: WO 2012/113770

(56) Entgegenhaltungen:
- EP-A2- 0 604 864
- DE-A1-102009 016 982

## Beschreibung

### Stand der Technik

Die Erfindung geht aus von einer antriebsschlupfgeregelten Bremsanlage eines Fahrzeugs mit einem Betriebsbremsventil, welches auf eine Betätigung hin an wenigstens einem Ausgang einen betätigungsabhängigen Druck erzeugt sowie mit einer Ventileinrichtung, welche gemäß einer ersten Schaltstellung einen Druckmittelvorrat und gemäß einer zweiten Schaltstellung wenigstens ein 2/2-Wege-Magnetventil mittelbar oder unmittelbar mit wenigstens einem Bremsaktuator in Verbindung bringt, wobei das wenigstens eine 2/2-Wege-Magnetventil einerseits mit dem Ausgang des Betriebsbremsventils und andererseits mit einem ersten Anschluss der Ventileinrichtung verbunden ist, gemäß dem Oberbegriff von Anspruch 1.

Eine solche antriebsschlupfgeregelte Bremsanlage ist aus DE 10 2009 016 982 A1 bekannt. Die bekannte Bremsanlage umfasst eine Haltestellenbremse wie sie heutige elektro-pneumatische Bremsanlagen von häufig Haltestellen anfahrenden Nutzfahrzeugen wie Omnibusse oder Müllfahrzeuge aufweisen. Eine solche Haltestellenbremse, welche in Bezug zur Betriebsbremseinrichtung zusätzlich eine Haltestellenbremsfunktion zur Verfügung stellt, wird an den Haltestellen aktiviert bzw. zugespannt. Hierzu ist ein von Hand betätigbarer Schalter vorgesehen, bei dessen Betätigung ein konstanter Druck von vorbestimmter Größe in die Betriebsbremszylinder wenigstens einer Achse eingesteuert wird, um das Kraftfahrzeug an den Haltestellen einzubremsen. Im Gegensatz zu einer normalen, über ein Fußbremsventil ausgelösten Betriebsbremsung ist der Bremsdruck bei der Haltstellenbremsfunktion daher nicht durch den Fahrer dosierbar.

Zur Realisierung der Haltestellenbremse ist in eine von einer Vorratsdruckleitung abgezweigten Druckleitung ein Druckbegrenzer sowie ein von einem Schalter betätigbares Magnetventil geschaltet, welches den auf den konstanten Haltestellendruck begrenzten Vorratsdruck in ein Wechselventil steuert, welches andererseits mit einem pneumatischen Kanal des Betriebsbremsventils verbunden ist, um den jeweils größeren Druck weiter zu steuern. In einer nachgeordneten Druckleitung ist weiterhin ein ASR-Ventil zur Regelung des Antriebsschlupfes vorhanden. Dieser Aufbau ist jedoch relativ komplex.

Der vorliegenden Erfindung liegt demgegenüber die Aufgabe zugrunde, antriebsschlupfgeregelte Bremsanlage der eingangs erwähnten Art derart fortzubilden, dass sie bei einfacherem Aufbau einen höheren Funktionsumfang aufweist.

Diese Aufgabe wird erfindungsgemäß durch die Merkmale von Anspruch 1 gelöst.

### Offenbarung der Erfindung

Der Erfindung liegt der Gedanke zugrunde, dass das wenigstens eine 2/2-Wege-Magnetventil und die Ventileinrichtung von einer Steuereinrichtung derart steuerbar sind, dass zur Antriebsschlupfregelung das 2/2-Wege-Magnetventil in Durchlassstellung und die Ventileinrichtung in die erste Schaltstellung geschaltet wird, und um auf der Basis des Druckmittels aus dem Druckmittelvorrat in dem wenigstens einen Bremsaktuator einen Bremsdruck in vorbestimmter Höhe zu erzeugen, das 2/2-Wege-Magnetventil in Sperrstellung und die Ventileinrichtung in die erste Schaltstellung geschaltet wird.

"Zur Antriebsschlupfregelung" bedeutet den Fall, dass der Antriebsschlupf beim Beschleunigen des Fahrzeugs eine vorgegebene Antriebsschlupfgrenze überschreitet und der (zu hohe) Ist-Antriebsschlupf deshalb an einen Soll-Antriebsschlupf angepasst werden muss.

Bei dem "Bremsdruck in vorbestimmter Höhe" handelt es sich beispielsweise um den Haltestellenbremsdruck für den Fall, dass das Haltestellenbremsbetätigungsorgan in eine die Haltstellenbremse zuspannende Stellung betätigt wurde. Weiterhin könnte es sich bei dem "Bremsdruck in vorbestimmter Höhe" auch um den im Rahmen einer Anfahrhilfefunktion (hill holder) vom Fahrer zuletzt zum Einbremsen des Fahrzeugs erzeugten Bremsdruck handeln, welcher über eine gewisse Zeitdauer, insbesondere bis zum erneuten Anfahren in den Bremsaktuatoren gehalten werden soll.

Somit können mit einem sehr einfachen Ventilaufbau, nämlich mit einem einzigen 2/2-Wege-Magnetventil und mit der Ventileinrichtung, die bevorzugt durch ein einziges 3/2-Wege-Magnetventil gebildet wird, mehrere heutzutage bei Nutzfahrzeugen übliche Zusatzfunktionen einer Bremsanlage wie Antriebsschlupfregelung oder hill holder realisiert werden. Dies resultiert in einem vorteilhaft einfachen und deshalb kostengünstigen Aufbau der Bremsanlage. Insbesondere ist für eine Realisierung einer Haltestellenbremse kein Druckbegrenzer mehr notwendig als der konstante Haltestellebremsdruck von der Ventileinrichtung aus dem Druckluftvorrat bereit gestellt wird, welche bereits zur Antriebsschlupfregelung dient. Somit übt diese Ventileinrichtung (z.B. 3/2-Wege-Magnetventil) eine vorteilhafte Doppelfunktion aus.

Durch die in den Unteransprüchen aufgeführten Maßnahmen sind vorteilhafte Weiterbildungen und Verbesserungen der in den unabhängigen Ansprüchen angegebenen Erfindung möglich.

Gemäß einer bevorzugten Ausführungsform ist der Ventileinrichtung und dem wenigstens einen Bremsaktuator wenigstens ein von der Steuereinrichtung gesteuertes ABS-Drucksteuerventil zwischengeordnet. Solche ABS-Drucksteuerventile sind hinlänglich bekannt und dienen zum Druckhalten, Drucksteigern und Drucksenken im Rahmen einer Antiblockierregelung. Zur Antriebsschlupfregelung beim Anfahren mit zu hohem Antriebsschlupf wird dann das wenigstens eine ABS-Drucksteuerventil bevorzugt getaktet gesteuert, um auf der Basis eines von der Ventileinrichtung aus dem Druckmittelvorrat in das wenigstens eine ABS-Drucksteuerventil eingesteuerten Drucks den Antriebschlupf an einen vorgegebenen Antriebsschlupf anzupassen. In diesem Fall dient die Ventileinrichtung dann dazu, einen noch durch die ABS-Drucksteuerventile zu modulierenden Vorratsdruck auf die ABS-Drucksteuerventile zu schalten.

Wie bereits oben erwähnt, beinhaltet die Bremsanlage bevorzugt eine Haltestellenbremse mit einem Haltestellenbremsbetätigungsorgan, auf dessen Betätigung durch den Fahrer hin Bremsaktuatoren wenigstens einer Achse mit einem vorbestimmten Haltestellenbremsdruck zugespannt werden. Die Haltestellenbremse beinhaltet beispielsweise ein elektrische Signale aussteuerndes, handbetätigtes Schaltorgan, welches vom Fahrer zum Haltestellenbremsen betätigt wird. Dann wird das wenigstens eine 2/2-Wege-Magnetventil auf das elektrische Haltestellenbremssignal hin von der Steuereinrichtung in Sperrstellung geschaltet. Zusätzlich wird die Ventileinrichtung von der Steuereinrichtung zwischen der ersten Schaltstellung und der zweiten Schaltstellung getaktet geschaltet, um auf der Basis des Drucks des Druckmittels aus dem Druckmittelvorrat den vorbestimmten Haltestellenbremsdruck in den Bremsaktuatoren der wenigstens einen Achse zu erzeugen. Bevorzugt wird solchermaßen der vorbestimmte Haltestellenbremsdruck in allen Bremsaktuatoren des Fahrzeugs erzeugt. Die Taktung bzw. Schaltung der Ventileinrichtung erfolgt dabei abhängig von dem zu erzielenden vorgegebenen Haltestellenbremsdruck.

Der "Bremsdruck in vorbestimmter Höhe" könnte aber auch ein Bremsdruck sein, welcher von einer Abstandsregelung oder Adaptive Cruise Control (ACC) vorgegeben wird, um etwa einen voreingestellten Abstand zu einem vorausfahrenden Fahrzeug einhalten zu können.

Nicht zuletzt könnte der "Bremsdruck in vorbestimmter Höhe" auch der Bremsdruck sein, mit welchem ein Fahrzeug im Rahmen einer in der Steuereinrichtung implementierten Anfahrhilfefunktion eingebremst wurde und welcher ohne weitere Betätigung der Bremse wenigstens über einen gewissen Zeitraum gehalten werden soll. Für diese Anfahrhilfe wird das 2/2-Wege-Magnetventil in Sperrstellung geschaltet, damit die Druckleitung zwischen dem Betriebsbremsventil und den Bremsaktuatoren unterbrochen bzw. der Druck in den Bremsaktuatoren der wenigstens einen Achse "eingesperrt" wird, so dass auf diese Weise der vom Fahrer zuletzt erzeugte Bremsdruck gehalten werden kann.

Da aber ein Druckverlust aus pneumatischen Systemen nie ganz ausgeschlossen werden kann, kann im Rahmen der Anfahrhilfefunktion (hill holder) zusätzlich vorgesehen sein, dass die dem 2/2-Wege-Magnetventil nachgeordnete Ventileinrichtung von der Steuereinrichtung zwischen der ersten Schaltstellung und der zweiten Schaltstellung getaktet geschaltet wird, um auf der Basis des Drucks des Druckmittels aus dem Druckmittelvorrat wenigstens den zuletzt eingesteuerten Bremsdruck in den Bremsaktuatoren der wenigstens einen Achse zu erzeugen bzw. dort auch über einen längeren Zeitraum zu halten. Bei festgestelltem oder aus anderen Größen geschätztem Druckverlust kann dann die Ventileinrichtung durch getaktete Schaltung, d.h. durch ein- oder mehrmaliges Umschalten zwischen der der ersten Schaltstellung und der zweiten Schaltstellung den zuletzt fahrerabhängig erzeugten Bremsdruck nachbilden bzw. halten. Dabei kann mittels getakteter Schaltung der Ventileinrichtung auch beispielsweise ein höherer Bremsdruck erzeugt werden als der zuletzt von der Betätigung durch den Fahrer abhängige Bremsdruck, welcher zum Einbremsen des Fahrzeugs geführt hat. Der Wert des zuvor fahrerabhängig erzeugten Bremsdrucks kann dabei beispielsweise geschätzt bzw. mittels eines Bremsdrucksensors gemessen werden.

Zu Funktionen wie Haltstellenbremse, Anfahrhilfe oder Abstandsregelung wird das wenigstens eine oben erwähnte ABS-Drucksteuerventil von der Steuereinrichtung angesteuert, dass es in Durchlassstellung geschaltet ist. Mit anderen Worten hat das ABS-Drucksteuerventil bevorzugt keinen Einfluss auf die Bremsdruckbildung in den genannten Fällen und kann für diese Zwecke auch entfallen, sofern das Fahrzeug über keine Antiblockierregelung beim Bremsen verfügt.

Die oben beschriebenen Beispiele betreffen allesamt Fälle, in denen ein bestimmtes Druckniveau eingestellt werden soll bzw. aufgebaut werden soll. Es sind jedoch im Rahmen von Funktionen wie beispielsweise einer Abstandsregelung auch Fälle denkbar, in welchen Bremsdruck abgebaut werden muss. Beispielsweise kann es im Rahmen einer Abstandsregelung vorkommen, dass, nachdem zunächst ein relativ hoher Bremsdruck zum Einstellen des vorgegebenen Mindestabstands zu einem plötzlich auf die Fahrbahn einscherenden Fahrzeugs wie oben beschrieben eingestellt wurde, dieser vergleichsweise hohe Bremsdruck nun nicht mehr notwendig ist, um beispielsweise auf einer Gefällestrecke den Abstand zum vorausfahrenden Fahrzeug konstant zu halten. Dann muss der zuvor eingestellte hohe Bremsdruck abgebaut werden.

Zum Druckabbau in dem wenigstens einen Bremsaktuator wird dann bevorzugt das wenigstens eine 2/2-Wege-Magnetventil von der Steuereinrichtung getaktet gesteuert und die Ventileinrichtung in die zweite Schaltstellung geschaltet. Dadurch kann zu hoher Bremsdruck über das dann durchgeschaltete Ventileinrichtung und das durchgeschaltete 2/2-Wege-Magnetventil über das Betriebsbremsventil auf die gewünschte niedrigere Höhe abgebaut werden, welches in der Regel über eine Drucksenke bzw. eine Entlüftung verfügt.

Mit dem wenigstens einen 2/2-Wege-Magnetventil und der Ventileinrichtung mit lediglich zwei Schaltstellungen können dann vorzugsweise für Zusatzfunktionen der Bremsanlage wie Antriebsschlupfregelung, Haltestellenbremse, Anfahrhilfe (hill holder) oder Abstandsregelung (ACC) mit geringem Aufwand Bremsdrücke sowohl gesteigert, gehalten als auch gesenkt werden. Die diesbezügliche Aufzählung ist nicht abschließend. Vielmehr ist ein Einsatz der Erfindung für weitere Zwecke, in denen ein Drucksteigern, ein Druckhalten und/oder ein Drucksenken von Belang ist, denkbar.

Gemäß einer Weiterbildung ist zwischen dem Ausgang des Betriebsbremsventils und dem wenigstens einen Bremsaktuator eine das 2/2-Wege-Magnetventil und die Ventileinrichtung überbrückende Bypassverbindung vorgesehen, in welche wenigstens ein Rückschlagventil derart geschaltet ist, dass es zum Ausgang des Betriebsbremsventils hin schließt und zu dem wenigstens einen Bremsaktuator hin öffnet. Diese Fortbildung der Erfindung ermöglicht über den parallelen Zweig der Bypassverbindung eine Erhöhung des Bremsdruckniveaus, welches durch das wenigstens eine 2/2-Wege-Magnetventil und die Ventileinrichtung im Rahmen der jeweiligen Funktion wie beispielsweise die Anfahrhilfe vorgegeben wurde. Wenn also der Fahrer die Trittplatte des Betriebsbremsventils betätigt, kann über diese parallele Bypassverbindung und das sich dann öffnende Rückschlagventil der Druck in dem wenigstens einen Bremsaktuator erhöht werden. Hingegen ist ein Druckabbau über die Bypassverbindung wegen des in Richtung Betriebsbremsventil schließenden Rückschlagventils nicht möglich.

Zur Steuerung größerer Luftmengen kann der Ventileinrichtung und dem wenigstens einen Bremsaktuator ein Relaisventil zwischengeordnet sein, welches steuerseitig mit der Ventileinrichtung verbunden ist.

Die Ventileinrichtung wird bevorzugt durchein 3/2-Wege-Magnetventil gebildet, wobei der erste Anschluss mit dem 2/2-Wege-Magnetventil, ein zweiter Anschluss mit dem Druckmittelvorrat und ein dritter Anschluss mittelbar oder unmittelbar mit dem wenigstens einen Bremsaktuator verbunden ist. Dabei schafft das 2/2-Wege-Magnetventil in seiner Durchlassstellung eine Verbindung zwischen dem ersten Anschluss des 3/2-Wege-Magnetventils und dem Ausgang des Betriebsbremsventils, wobei in seiner Sperrstellung diese Verbindung gesperrt wird.

Gemäß einer weiteren Ausführungsform können das das 2/2-Wege-Magnetventil und die Ventileinrichtung bzw. das 3/2-Wege-Magnetventil in einem gemeinsamen Gehäuse untergebracht sein und durch ein einziges Ventil gebildet werden, welches dann alle Schaltfunktionalitäten des 2/2-Wege-Magnetventils und der Ventileinrichtung bzw. des 3/2-Wege-Magnetventils umfasst.

Genaueres geht aus der folgenden Beschreibung eines Ausführungsbeispiels hervor.

### Zeichnung

Nachstehend sind Ausführungsbeispiele der Erfindung in der Zeichnung dargestellt und in der nachfolgenden Beschreibung näher erläutert. In der Zeichnung zeigt
- Fig.1: ein schematisches Schaltbild einer druckmittelbetätigten Bremsanlage mit einer Ventileinheit gemäß einer bevorzugten Ausführungsform der Erfindung;
- Fig.2: ein schematisches Schaltbild der Ventileinheit von Fig.1 gemäß einer bevorzugten Ausführungsform beinhaltend ein mit einem 3/2-Wege-Magnetventil zusammen wirkendes 2/2-Wege-Magnetventil;
- Fig.3: ein schematisches Schaltbild der Ventileinheit von Fig.1 gemäß einer weiteren Ausführungsform beinhaltend ein mit einem 3/2-Wege-Magnetventil zusammen wirkendes 2/2-Wege-Magnetventil sowie einen Bypass mit einem Rückschlagventil;
- Fig.4: ein schematisches Schaltbild der Ventileinheit von Fig.1 gemäß einer weiteren Ausführungsform beinhaltend ein mit einem 3/2-Wege-Magnetventil zusammen wirkendes 2/2-Wege-Magnetventil sowie ein Relaisventil;
- Fig.5: ein schematisches Schaltbild der Ventileinheit von Fig.1 gemäß einer weiteren Ausführungsform beinhaltend ein mit einem 3/2-Wege-Magnetventil zusammen wirkendes 2/2-Wege-Magnetventil, einen Bypass mit einem Rückschlagventil sowie ein Relaisventil;
- Fig.6: ein schematisches Schaubild einer Steuereinrichtung der Bremsanlage von Fig.1;
- Fig.7: ein Flussdiagramm, welches eine Betriebsbremsung repräsentiert;
- Fig.8: ein Flussdiagramm, welches eine Betriebsbremsung mit ABS-Aktivität repräsentiert;
- Fig.9: ein Flussdiagramm, welches eine automatisch ausgelöste Bremsung repräsentiert.

### Beschreibung der Ausführungsbeispiele

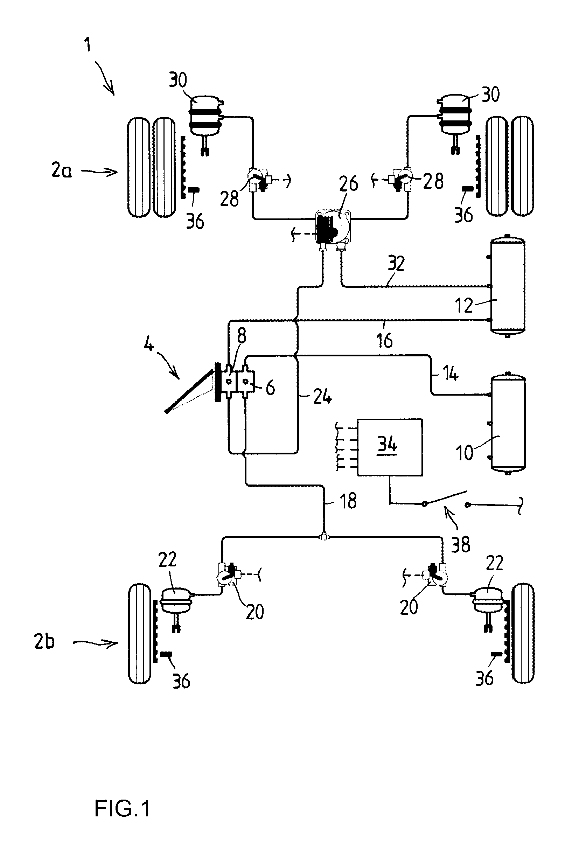

Das in Fig.1 gezeigte schematische Schaltbild einer Bremsanlage 1 eines Omnibusses beschränkt sich auf die für die Erfindung wesentlichen Baugruppen und Bauelemente bzw. mit diesen zusammen wirkenden Komponenten. Lediglich die Hinterachse 2a des Omnibusses sei angetrieben, wobei die Vorderachse 2b eine nicht angetriebene, aber lenk- und bremsbare Vorderachse ist.

Die Bremsanlage 1 des Ausführungsbeispiels ist mit Ausnahme von Zusatzfunktionen wie beispielsweise einer Haltestellenbremse und einer Antriebsblockierregelung (ASR) rein pneumatisch gesteuert und betätigt und verfügt auch über ABS-Funktionalitäten. Alternativ kann die Bremsanlage 1 auch eine elektro-pneumatische Bremseinrichtung oder auch ein elektronisch geregeltes Bremssystem (EBS) sein.

Demzufolge verfügt die Bremsanlage 1 über ein beispielsweise zweikanaliges, über eine Trittplatte mit dem Fuß des Fahrers betätigbares Betriebsbremsventil 4, wobei ein Vorderachskanal 6 des Betriebsbremsventils 4 einem Vorderachsbetriebsbremskreis und ein Hinterachskanal 8 einem Hinterachsbetriebsbremskreis zugeordnet ist. Hierzu ist ein Eingang des Vorderachskanals 6 des Betriebsbremsventils 4 mit einem Vorderachs-Druckluftvorrat 10 und ein Eingang des Hinterachskanals 8 mit einem Hinterachs-Druckluftvorrat 12 jeweils über eine Vorratsleitung 14, 16 verbunden.

Andererseits steht ein Ausgang des Vorderachskanals 6 des Betriebsbremsventils 4 über eine Druckleitung 18 und ABS-Drucksteuerventile 20 mit Bremsaktuatoren 22 der Vorderachse 2b und ein Ausgang des Hinterachskanals 8 des Betriebsbremsventils 4 über eine Druckleitung 24, eine Ventileinheit 26 sowie über diesbezüglich nachgeordnete radweise ABS-Drucksteuerventile 28 mit Bremsaktuatoren 30 der Hinterachse in Verbindung. Die Ventileinheit 26 wird über eine weitere Vorratsleitung 32 mit beispielsweise dem Hinterachs-Druckluftvorrat 12 verbunden. Die Ventileinheit 26 ist in die Druckleitung 24 des Hinterachsbetriebsbremskreises geschaltet.

Die Bremsaktuatoren 22, 30 der Vorderachse 2b und der Hinterachse sind pneumatische aktive Betriebsbremszylinder, an der Hinterachse 2a zusammen mit passiven Federspeicherzylindern als Kombizylinder. Für die angetriebene Hinterachse 2a des Omnibusses ist eine Antriebsschlupfregelung (ASR) vorgesehen, durch welche ein Ist-Antriebsschlupf in bekannter Weise auf einen Soll-Antriebsschlupf eingeregelt wird. Weiterhin ist für die Vorderachse 2b wie auch für die Hinterachse 2a ein radweise gesteuertes ABS vorgesehen.

Die als Magnetventile ausgebildeten und hinreichend bekannten ABS-Drucksteuerventile 20, 28 und die elektromagnetische Ventileinheit 26 werden bevorzugt von einer elektronischen Steuereinrichtung 34 gesteuert. Weiterhin sind radweise Raddrehzahlsensoren 36 vorhanden, um wenigstens im Rahmen von ABS und ASR Raddrehzahlinformationen an die Steuereinrichtung 34 zu liefern. Die Haltestellenbremse beinhaltet beispielsweise einen elektrischen Schalter 38, welcher ein Haltestellenbremssignal an die elektronische Steuereinrichtung 34 liefern kann, um die Haltestellebremse zuzuspannen bzw. zu lösen.

Der Hinterachsbetriebsbremskreis umfasst folglich den Hinterachs-Druckluftvorrat 12, den Hinterachskanal 8 des Betriebsbremsventils 4, die Ventileinheit 26, die ABS-Drucksteuerventile 28 der Räder der Hinterachse 2a und die Bremsaktuatoren 30. Zusammen mit den Komponenten des Vorderachsbetriebsbremskreises wie dem Vorderachs-Druckluftvorrat 10, dem Vorderachskanal 6 des Betriebsbremsventils 4, den ABS-Drucksteuerventilen 20 der Räder der Vorderachse 2b bilden zusammen mit der Steuereinrichtung 34 die Komponenten des Hinterachsbetriebsbremskreises eine Betriebsbremseinrichtung einer Betriebsbremse des Omnibusses aus, welche dazu benutzt wird, das in Fahrt befindliche Fahrzeug einzubremsen.

Der Haltestellenbremskreis bzw. die Haltestellenbremse, welche hier beispielsweise mit dem Hinterachsbetriebsbremskreis zusammen wirkt bzw. sich mit diesem überschneidet, beinhaltet den Schalter 38 als Haltestellenbremsenbetätigungsorgan, die Steuereinrichtung 34 sowie die Ventileinheit 26.

Falls die Bremseinrichtung 1 ein elektronisch geregeltes Bremssystem (EBS), mit einem elektronischen EBS-Steuergerät ist, kann die elektronische Steuereinrichtung 34 auch in das EBS-Steuergerät integriert sein. Die elektronische Steuereinrichtung 34 ist über in Fig.1 gestrichelt gezeichnete Steuer- bzw. Signalleitungen mit den Raddrehzahlsensoren 36, den ABS-Drucksteuerventilen 20, 28 sowie mit der Ventileinheit 26 verbunden.

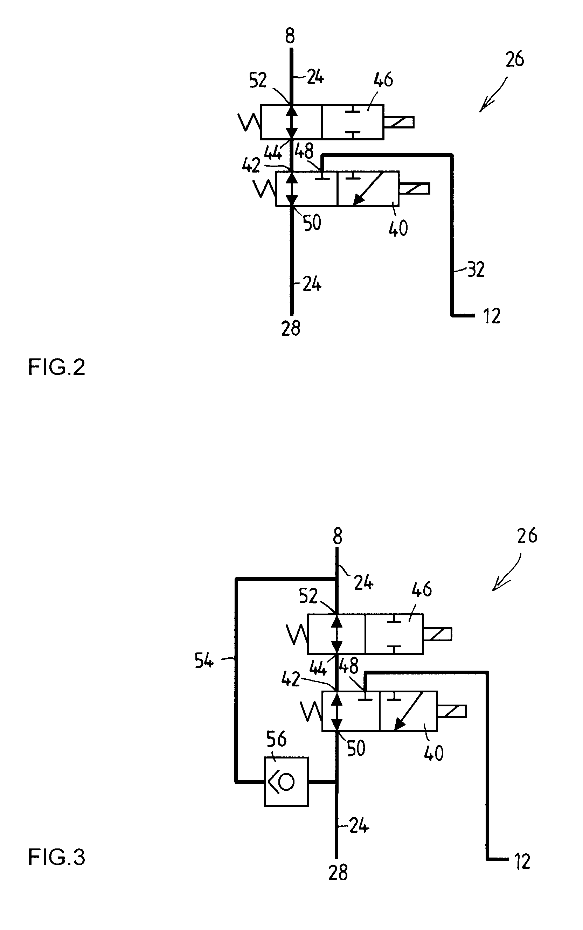

Die in Fig.2 gezeigte bevorzugte Ausführungsform der Ventileinheit 26 beinhaltet beispielsweise ein 3/2-Wege-Magnetventil 40, dessen erster Anschluss 42 mit einem Anschluss 44 eines 2/2-Wege-Magnetventil 46, dessen zweiter Anschluss 48 über die Vorratsleitung 32 mit dem Hinterachs-Druckmittelvorrat 12 und dessen dritter Anschluss 50 über die ABS-Drucksteuerventile 28 der Hinterachse 2a mit den Bremsaktuatoren 30 der Hinterachse 2a verbunden ist. Der weitere Anschluss 52 des 2/2-Wege-Magnetventils 46 ist beispielsweise direkt mit der Druckleitung 24 des Hinterachskanals 8 des Betriebsbremsventils 4 verbunden.

Dabei schafft das 2/2-Wege-Magnetventil 46 in seiner in Fig.2 gezeigten beispielsweise entstromten und federbelasteten Durchlassstellung eine Verbindung zwischen dem ersten Anschluss 42 des 3/2-Wege-Magnetventils 40 und dem Hinterachskanal 8 des Betriebsbremsventils 4, wobei in seiner beispielsweise bestromten Sperrstellung diese Verbindung gesperrt wird. Weiterhin bringt das 3/2-Wege-Magnetventil 40 gemäß einer ersten Schaltstellung den Hinterachs-Druckmittelvorrat 12 und gemäß einer zweiten, in Fig.2 gezeigten Schaltstellung den Anschluss 44 des 2/2-Wege-Magnetventils 46 mit den ABS-Drucksteuerventilen 28 der Hinterachse 2a und damit mittelbar mit den Bremsaktuatoren 30 der Hinterachse in Verbindung.

Die Ventileinheit 26 bildet bevorzugt eine Baueinheit mit einem gemeinsamen Gehäuse für das 2/2-Wege-Magnetventil 46 und das 3/2-Wege-Magnetventil 40 sowie für weitere Bauelemente, welche weiteren, im Folgenden beschriebenen Ausführungsformen vorbehalten sind und ist mit entsprechenden Anschlüssen versehen.

Vor diesem Hintergrund ist die Funktionsweise der Bremsanlage 1 wie folgt: Für Betriebsbremsungen wird das Betriebsbremsventil 4 vom Fahrer betätigt, wobei im Vorderachskanal 6 bzw. im Hinterachskanal 8 entsprechende Bremsdrücke erzeugt und in die ABS-Drucksteuerventile 20, 28 eingesteuert werden. Diese steuern die Bremsdrücke für den Fall durch, dass keine unzulässigen Bremsschlüpfe an den Rädern auftreten. Andernfalls, d.h. bei unzulässigen Bremsschlüpfen wird der Bremsdruck von den ABS-Drucksteuerventilen 20, 28 gesenkt, gehalten oder gesteigert.

Zur Antriebsschlupfregelung beim Beschleunigen, d.h. wenn der Antriebsschlupf einen Soll-Antriebsschlupf überschreitet, wird das 2/2-Wege-Magnetventil 46 in die in Fig.2 gezeigte Durchlassstellung und das 3/2-Wege-Magnetventil 40 in die erste Schaltstellung geschaltet, in welcher der Hinterachs-Druckluftvorrat 12 mit den ABS-Drucksteuerventilen 28 der Hinterachse 2a verbunden wird. Die ABS-Drucksteuerventile 28 regeln dann auf der Basis des eingesteuerten Vorratsdrucks radweise den Bremsdruck in den Bremsaktuatoren 30 der Hinterachse 2a abhängig von der Regelabweichung. Für eine achsweise Bremsdruckregelung im Rahmen von ASR könnte aber auch das 2/2-Wege-Magnetventil 46 von der Steuereinrichtung 34 angesteuert werden, um die Regelabweichung auszugleichen, beispielsweise durch getaktetes Hin- und Herschalten zwischen der Durchgangs- und der Sperrstellung.

Wenn im Rahmen der Haltestellenbremse durch Betätigung des Schalters 38 die Bremsaktuatoren 30 der Hinterachse 2a mit einem vorbestimmten Haltestellenbremsdruck zugespannt werden sollen, so veranlasst die Steuereinrichtung 34 auf das entsprechende elektrische Haltestellenbremssignal hin, dass das 2/2-Wege-Magnetventil 46 in Sperrstellung geschaltet wird. Zusätzlich wird das 3/2-Wege-Magnetventil 40 von der Steuereinrichtung 34 zwischen der ersten Schaltstellung und der zweiten Schaltstellung getaktet geschaltet, um auf der Basis des Drucks des Druckmittels aus dem Hinterachs-Druckmittelvorrat 12 den vorbestimmten Haltestellenbremsdruck für die Bremsaktuatoren 30 der Hinterachse 2a zu erzeugen. Die Taktung bzw. Schaltung des 3/2-Wege-Magnetventils 40 erfolgt dabei abhängig von dem zu erzielenden und vorgegebenen Haltestellenbremsdruck.

Eine Ventileinheit 26 der beschriebenen Art könnte allerdings auch zusätzlich an der Vorderachse 2b vorgesehen sein. Eine solche Ventileinheit 34 würde dann beispielsweise von dem Vorderachs-Druckluftvorrat 10 mit Druckluft versorgt und wäre in die Druckleitung 18 geschaltet. Der durch die Ventileinheiten 34 an der Vorderachse 2b und an der Hinterachse 2a eingestellte Bremsdruck in vorbestimmter Höhe könnte dann ein Bremsdruck sein, welcher von einer Abstandsregelung oder Adaptive Cruise Control (ACC) vorgegeben wird, um etwa einen voreingestellten Abstand zu einem vorausfahrenden Fahrzeug einhalten zu können.

Nicht zuletzt könnte der "Bremsdruck in vorbestimmter Höhe" auch der Bremsdruck sein, mit welchem ein Fahrzeug im Rahmen einer in der Steuereinrichtung 34 implementierten Anfahrhilfefunktion eingebremst wurde und welcher ohne weitere Betätigung der Bremse wenigstens über einen gewissen Zeitraum gehalten werden soll. Für die Anfahrhilfe wird das 2/2-Wege-Magnetventil 46 ebenfalls in Sperrstellung geschaltet, damit die Druckleitung 24 bzw. 18 zwischen dem Betriebsbremsventil 4 und den Bremsaktuatoren 22, 30 unterbrochen bzw. der Druck in den Bremsaktuatoren 22, 30 wenigstens einer Achse 2a, 2b "eingesperrt" wird, so dass auf diese Weise der vom Fahrer zuletzt erzeugte Bremsdruck gehalten werden kann.

Um mögliche Druckverluste zu kompensieren, kann im Rahmen der Anfahrhilfefunktion (hill holder) zusätzlich vorgesehen sein, dass die dem 2/2-Wege-Magnetventil 46 nachgeordnete 3/2-Wege-Magnetventil 40 von der Steuereinrichtung 34 zwischen der ersten Schaltstellung und der zweiten Schaltstellung getaktet geschaltet wird, um auf der Basis des Drucks des Druckmittels aus dem Hinterachs-Druckmittelvorrat 12 bzw. dem Vorderachs-Druckmittelvorrat 10 wenigstens den zuletzt eingesteuerten Bremsdruck in den Bremsaktuatoren 22, 30 zu erzeugen bzw. dort auch über einen längeren Zeitraum zu halten. Der Wert des zuvor fahrerabhängig erzeugten Bremsdrucks kann dabei beispielsweise geschätzt bzw. mittels eines Bremsdrucksensors gemessen werden.

Zu Funktionen wie Haltstellenbremse, Anfahrhilfe oder Abstandsregelung werden die ABS-Drucksteuerventile 20, 28 von der Steuereinrichtung 34 angesteuert, dass sie in Durchlassstellung geschaltet sind, so dass die ABS-Drucksteuerventile 20, 28 bevorzugt keinen Einfluss auf die Bremsdruckbildung in den genannten Fällen haben. Es ist aber auch denkbar, die ABS-Drucksteuerventile 20, 28 beispielsweise durch Taktung an der Bildung von vorgegebenen Bremsdrücken teilhaben zu lassen.

Im Rahmen beispielsweise einer Abstandsregelung kann es vorkommen, dass, ein vergleichsweise zuvor eingestellter hoher Bremsdruck reduziert werden muss. Zum Druckabbau in den Bremsaktuatoren 22, 30 wird dann bevorzugt das 2/2-Wege-Magnetventil 46 von der Steuereinrichtung 34 getaktet gesteuert und das 3/2-Wege-Magnetventil 40 in die zweite Schaltstellung geschaltet. Dadurch kann zu hoher Bremsdruck über das dann durchgeschaltete 3/2-Wege-Magnetventil 40 und das zweitweise durchgeschaltete 2/2-Wege-Magnetventil 46 über das Betriebsbremsventil 4 auf die gewünschte niedrigere Höhe abgebaut werden, da das Betriebsbremsventil 4 über eine Drucksenke bzw. eine Entlüftung verfügt.

Bei den Ausführungsformen von Fig.3 bis Fig.5 sind identische bzw. gleich wirkende Bauteile und Baugruppen mit den gleichen Bezugszahlen wie in Fig.2 gekennzeichnet.

Bei der Ausführungsform von Fig.3 ist zwischen dem Hinterachskanal 8 des Betriebsbremsventils 4 und den ABS-Drucksteuerventilen 28 bzw. den Bremsaktuatoren 30 der Hinterachse eine das 2/2-Wege-Magnetventil 46 und das 3/2-Wege-Magnetventil 40 in der Druckleitung 24 überbrückende Bypassverbindung 54 vorgesehen, welche bevorzugt ebenfalls in die Ventileinheit 26 bzw. Baueinheit integriert ist. Die Bypassverbindung 54 zweigt daher von der Druckleitung 24 vor dem 2/2-Wege-Magnetvenbtil 46 ab und mündet nach dem 3/2-Wege-Magnetventil 40 wieder in die Druckleitung 24, gesehen vom Betriebsbremsventil 4 aus.

In diese Bypassverbindung 54 ist wenigstens ein Rückschlagventil 56 derart geschaltet, dass es zum Hinterachskanal 8 des Betriebsbremsventils 4 hin schließt und zu den ABS-Drucksteuerventilen 28 bzw. zu den Bremsaktuatoren 30 hin öffnet. Dies ermöglicht über den parallelen Zweig der Bypassverbindung 54 eine Erhöhung des vorbestimmten bzw. gewünschten Bremsdruckniveaus, welches durch das 2/2-Wege-Magnetventil 46 und das 3/2-Wege-Magnetventil 40 beispielsweise im Rahmen der Anfahrhilfe vorgegeben wurde. Wenn also der Fahrer die Trittplatte des Betriebsbremsventils 4 betätigt, kann über diese parallele Bypassverbindung 54 und das sich dann öffnende Rückschlagventil 56 der Druck in den Bremsaktuatoren 30 erhöht werden. Hingegen ist ein Druckabbau über die Bypassverbindung 54 wegen des in Richtung Betriebsbremsventil 4 schließenden Rückschlagventils 56 nicht möglich. Ansonsten ist die Funktionsweise der Ventileinheit 26 wie im Zusammenhang mit Fig.2 beschrieben.

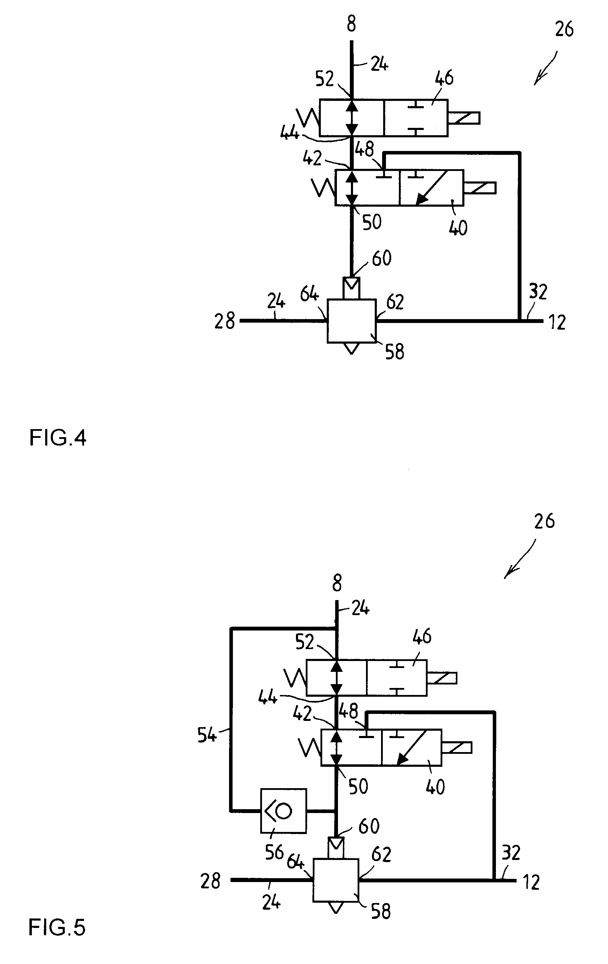

Bei der Ausführungsform von Fig.4 ist zur Steuerung größerer Luftmengen dem 3/2-Wege-Magnetventil 40 und den ABS-Drucksteuerventilen 28 bzw. den Bremsaktuatoren 30 ein Relaisventil 58 zwischengeordnet. Dabei ist ein Steueranschluss 60 des Relaisventils 58 mit dem dritten Anschluss 50 des 3/2-Wege-Magnetventils 40, ein Vorratsanschluss 62 beispielsweise mit dem Hinterachs-Druckluftvorrat 12 und ein Arbeitsanschluss 64 mit den ABS-Drucksteuerventilen 28 bzw. direkt mit den Bremsaktuatoren 30 verbunden. Nicht zuletzt verfügt das Relaisventil 58 auch über eine Entlüftung. Das Relaisventil 58 moduliert abhängig von dem an seinem Steueranschluss 60 anstehenden Druck aus dem Druck des Hinterachs-Druckluftvorrats 12 einen entsprechenden Bremsdruck. Ansonsten ist die Funktionsweise der Ventileinheit 26 wie im Zusammenhang mit Fig.2 beschrieben.

Bei der Ausführungsform von Fig.5 sind sowohl eine Bypassverbindung 54 mit Rückschlagventil 56 wie auch ein Relaisventil 58 vorgesehen, so dass bezüglich der Funktionsweise auf die obigen Ausführungen zu Fig. 3 und Fig.4 verwiesen wird und dabei klar ist, dass die dort beschriebenen Funktionen in Kombination vorhanden sind.

Gemäß einer weiteren Ausführungsform können die beiden in der Ventileinheit 26 verbauten und in einem gemeinsamen Gehäuse angeordneten Ventile, nämlich das 2/2-Wege-Magnetventil 46 und das 3/2-Wege-Magnetventil 40 von Fig.2 als ein einziges Ventil ausgeführt sein, welches alle Schaltfunktionalitäten des 2/2-Wege-Magnetventils 46 und des 3/2-Wege-Magnetventils 40 umfasst. Ein solches einziges Ventil weist dann einen Anschluss an den Druckluftvorrat 12, einen Anschluss für den Hinterachskanal 8 des Betriebsbremsventils 4 sowie einen Anschluss für ein ABS-Drucksteuerventil 28 auf.

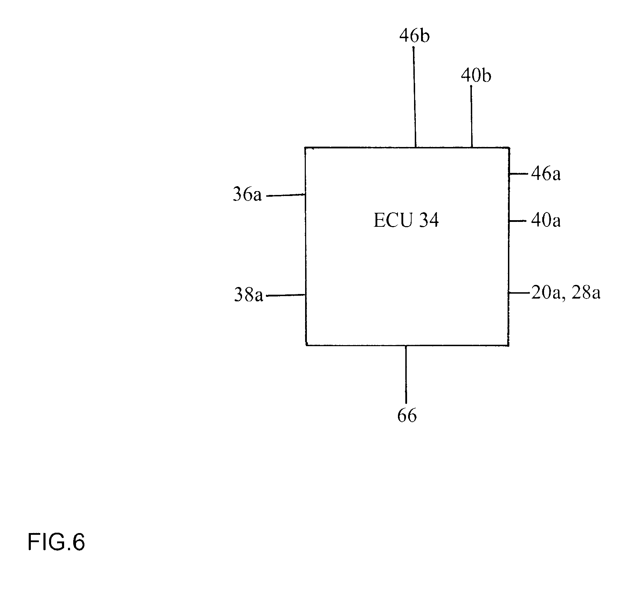

In Fig.6 ist die Steuereinrichtung 34 im Detail dargestellt. Sie weist folgende elektrischen Verbindungen bzw. Anschlüsse auf:
- Anschlüsse 36a für die Raddrehzahlsensoren 36,
- einen Anschluss 38a für den Schalter "Haltstellenbremse",
- einen Anschluss 46a für das 2/2-Wege-Magnetventil 46 der der Hinterachse 2a zugeordneten Ventileinheit 26,
- einen Anschluss 40a für das 3/2-Wege-Magnetventil 40 der der Hinterachse 2a zugeordneten Ventileinheit 26,
- Anschlüsse 20a, 28a für die ABS-Drucksteuerventile 20, 28 der Hinterachse 2a und der Vorderachse 2b, und
- falls, wie oben bereits angedeutet, der Vorderachse 2b ebenfalls eine Ventileinheit 26 wie in Fig.2 zugeordnet ist, einen Anschluss 46b für das 2/2-Wege-Magnetventil 46 der der Vorderachse 2b zugeordneten Ventileinheit 26 sowie einen Anschluss 40b für das 3/2-Wege-Magnetventil 40 der der Vorderachse 2b zugeordneten Ventileinheit 26, sowie
- einen Anschluss 66 für externe Signale, beispielsweise über eine Datenbusverbindung des Fahrzeugs.

Vor diesem Hintergrund führt die Steuereinrichtung 34 folgende Funktionen aus:
- Sie empfängt über die Anschlüsse 36a die Raddrehzahlwerte von der Raddrehzahlsensoren 36 und bestimmt, ob der Bremsschlupf oder Antriebsschlupf zulässige Werte über- bzw. unterschreitet,
- sie empfängt über den Anschluss 38a die elektrischen Signale des Schalters "Haltestellenbremse",
- sie empfängt über den Anschluss 66 ein Verzögerungssignal für eine automatische Einbremsung des Fahrzeugs, beispielsweise von einer Adaptive Cruise Control (ACC), von einem ESP-System oder einer AnfahrhilfeFunktion (hill holder),
- sie weist einen Speicher auf für vorbestimmte Grenzwerte von Bremsdrücken für jede Bremsfunktion- oder Bremsart. Insbesondere können für die Hinterachse 2a und die Vorderachse 2b verschiedene Grenzwerte für Bremsdrücke gespeichert sein, falls für die Vorderachse 2b ein zusätzliches ASR-Ventil vorgesehen ist (Verschiedene Grenzwerte für Bremsdrücke an jedem einzelnen Rad können im ABS-Fall gespeichert sein. Nicht zuletzt können ein Bremsdruckwert für den Haltestellenbremsdruck im Fall "Haltestellenbremse", ein Bremsdruckwert für den Anfahrhilfe-Bremsdruck (hill holder Bremsdruck) sowie ein Bremsdruckwert für einen automatisch ausgelösten Bremsvorgang gespeichert sein),
- sie steuert das 2/2-Wege-Magnetventil 44 über den Anschluss 44a,
- sie steuert das 3/2-Wege-Magnetventil 40 über den Anschluss 40a,
- sie steuert die ABS-Drucksteuerventile 20, 28 abhängig vom jeweiligen Bremsschlupf über die Anschlüsse 20a, 28a.

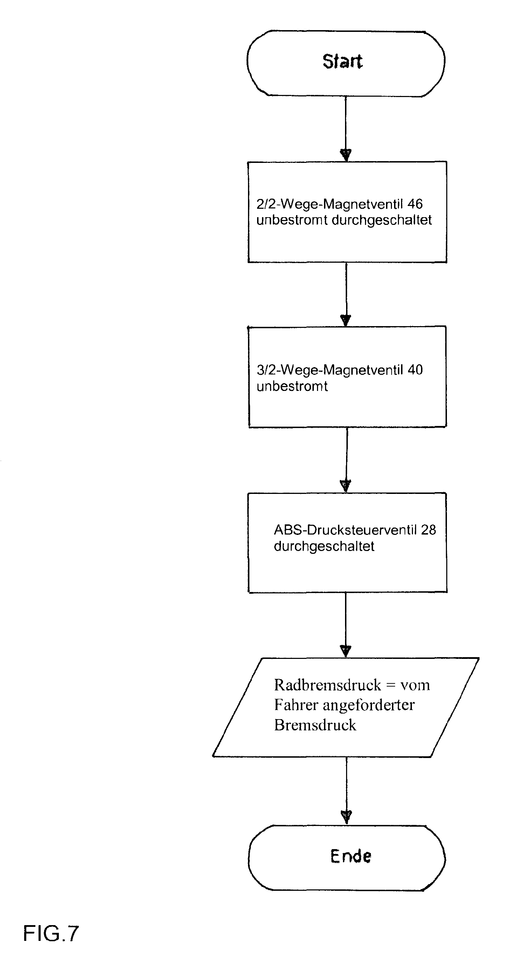

In den Figuren 7 bis 9 sind Flussdiagramme für verschiedene Bremsmodi dargestellt, welche von den Steuerroutinen der Steuereinrichtung ausgeführt werden. So zeigt Fig.7 ein Flussdiagramm für eine normale Betriebsbremsung, für welchedie Ventileinheit 26, d.h. das 2/2-Wege-Magnetventil 46 sowie das 3/2-Wege-Magnetventil 40 nach dem Programmstart unbestromt geschaltet werden und sich in den in Fig.2 gezeigten Schaltstellungen befinden, in welchen sie den vom Hinterachskanal 8 des Betriebsbremsventils 4 herangeführten Bremsdruck an das ABS-Drucksteuerventil 28 durchsteuern, welches diesen Druck ebenfalls unverändert zu der entsprechenden Radbremse durchsteuert.

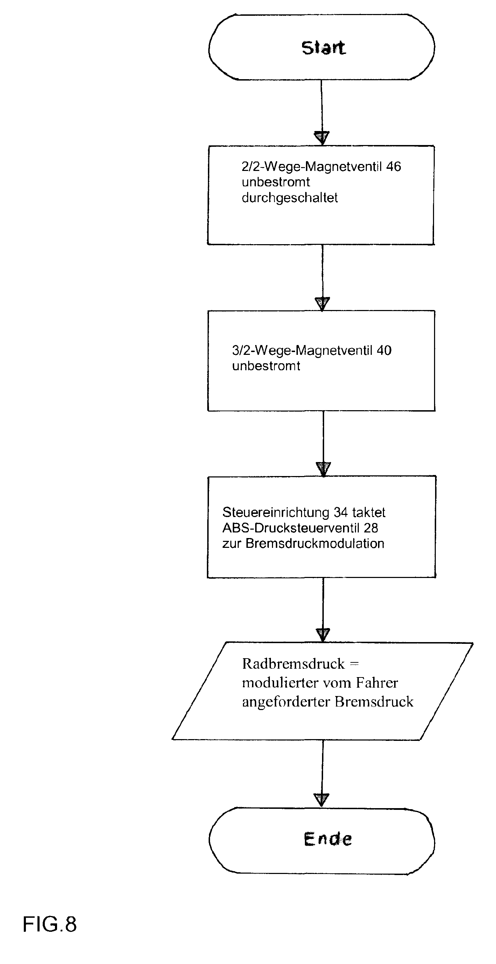

In Fig.8 ist ein Flussdiagramm gezeigt, welches eine Betriebsbremsung mit ABS-Aktivität beschreibt. Nach dem Programmstart wird die Ventileinheit 26, d.h. das 2/2-Wege-Magnetventil 46 sowie das 3/2-Wege-Magnetventil 40 wiederum unbestromt geschaltet, so dass diese sich in den in Fig.2 gezeigten Schaltstellungen befinden. Jedoch steuert die Steuereinrichtung 34 z.B. das ABS-Drucksteuerventil 28 getaktet an, um den vom Fahrer im Hinterachskanal 8 erzeugten Bremsdruck entsprechend einem optimalen Bremsschlupf zu modulieren, um diesen modulierten Bremsdruck in die entsprechende Radbremsen oder die entsprechenden Radbremsen einzusteuern.

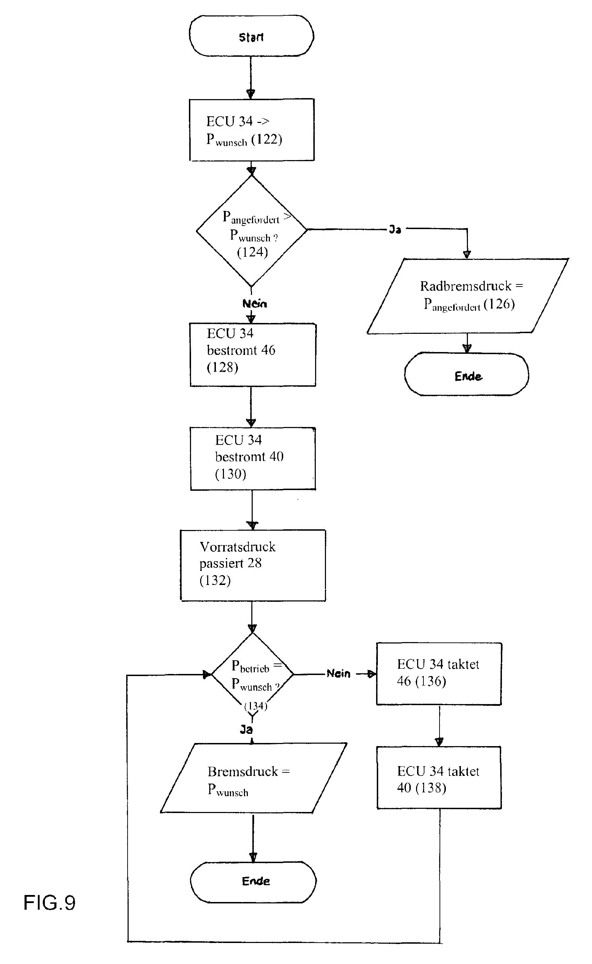

Fig.9 zeigt schließlich ein Flussdiagramm, bei welchem der Bremsdruck nicht vom Fahrer, sondern automatisch erzeugt wird, beispielsweise von einer Anfahrhilfe-Funktion (hill holder), einer ESP-Funktion, einer ACC-Funktion oder einer Haltestellenbremse.

Nach dem Programmstart berechnet die Steuereinrichtung 34 aus einer Anforderung der jeweiligen automatischen Bremsfunktion gemäß Schritt 122 den gewünschten Bremsdruck P_{wunsch}. Für den Fall, dass der Fahrer parallel zu der jeweiligen automatischen Bremsfunktion die Betriebsbremse betätigt wird im Schritt 124 abgefragt, ob der Bremsdruck P_{wunsch} größer als der durch den Fahrer angeforderte Bremsdruck P_{angefordert} ist. Falls dies der Fall ist ("Ja"), so werden die Radbremsdrücke bzw. der Radbremsdruck nach dem vom Fahrer angeforderten Bremsdruck P_{angefordert} gemäß Schritt 126 bestimmt. Falls dies jedoch nicht der Fall ist ("Nein"), so bestromt die Steuereinrichtung 34 im Schritt 128 das 2/2-Wege-Magnetventil 46 der Ventileinheit 26, so dass dieses in seine Sperrstellung geschaltet wird. Gleichzeitig wird auch das 3/2-Wege-Magnetventil 40 der Ventileinheit 26 bestromt, damit dieses den Vorratsdruck im Hinterachs-Druckluftvorrat 12 auf das ABS-Drucksteuerventil 28 gemäß Schritt 130 schaltet. Folglich strömt dann Druckluft unter Vorratsdruck dem ABS-Drucksteuerventil 28 gemäß Schritt 132 zu. Hieraus ergibt sich ein aktueller Betriebsbremsdruck P_{betrieb}.

Im Schritt 134 wird abgefragt, ob der aktuelle Betriebsbremsdruck P_{betrieb} gleich dem gewünschten Bremsdruck P_{wunsch} ist. Falls "Ja", so verbleibt gemäß Schritt 140 das ABS-Drucksteuerventil 28 in seiner Durchsteuerstellung, so dass der aktuelle, aus dem Vorratsdruck des Hinterachs-Druckluftvorrats 12 abgeleitete Betriebsbremsdruck P_{betrieb} zu den Radbremsen durchgesteuert wird. Falls "Nein", so wird das 2/2-Wege-Magnetventil 46 der Ventileinheit 26 von der Steuereinrichtung 34 getaktet geschaltet, dass ein beispielsweise zu hoher Betriebsbremsdruck P_{betrieb} über das dann durchgeschaltete 3/2-Wege-Magnetventil 40 und das zweitweise durchgeschaltete 2/2-Wege-Magnetventil 46 über das Betriebsbremsventil 4 auf die gewünschte niedrigere Höhe gemäß Schritt 136 abgebaut wird, da das Betriebsbremsventil 4 über eine Drucksenke bzw. eine Entlüftung verfügt. Andernfalls, also wenn ein beispielsweise zu niedriger Betriebsbremsdruck P_{betrieb} erhöht werden soll, dann wird das 3/2-Wege-Magnetventil 40 der Ventileinheit 26 von der Steuereinrichtung 34 getaktet geschaltet, um zweitweise Druckluft unter Vorratsdruck aus dem Hinterachs-Druckluftvorrat 12 gemäß Schritt 138 zuzuführen.

### Bezugszeichenliste

- 1: Bremsanlage
- 2a: Hinterachse
- 2b: Vorderachse
- 4: Betriebsbremsventil
- 6: Vorderachskanal
- 8: Hinterachskanal
- 10: Vorderachs-Druckluftvorrat
- 12: Hinterachs-Druckluftvorrat
- 14: Vorratsleitung
- 16: Vorratsleitung
- 18: Druckleitung
- 20: ABS-Drucksteuerventile
- 20a: Anschluss
- 22: Bremsaktuator
- 24: Druckleitung
- 26: Ventileinheit
- 28: ABS-Drucksteuerventile
- 28a: Anschluss
- 30: Bremsaktuator
- 32: Vorratsleitung
- 34: Steuereinrichtung
- 36: Raddrehzahlsensoren
- 36a: Anschluss
- 38: Schalter
- 38a: Anschluss
- 40: 3/2-Wege-Magnetventil
- 40a: Anschluss
- 40b: Anschluss
- 42: erster Anschluss
- 44: Anschluss
- 46: 2/2-Wege-Magnetventil
- 46a: Anschluss
- 48: zweiter Anschluss
- 50: dritter Anschluss
- 52: Anschluss
- 54: Bypassverbindung
- 56: Rückschlagventil
- 58: Relaisventil
- 60: Steueranschluss
- 62: Vorratsanschluss
- 64: Arbeitsanschluss
- 66: Anschluss

## Patentansprüche

1. Antriebsschlupfgeregelte Bremsanlage (1) eines Fahrzeugs mit
a) einem Betriebsbremsventil (4), welches auf eine Betätigung hin an wenigstens einem Ausgang (8) einen betätigungsabhängigen Druck erzeugt,
b) einer Ventileinrichtung (40), welche gemäß einer ersten Schaltstellung einen Druckmittelvorrat (12) und gemäß einer zweiten Schaltstellung wenigstens ein 2/2-Wege-Magnetventil (46) mittelbar oder unmittelbar mit wenigstens einem Bremsaktuator (30) in Verbindung bringt, wobei
c) das wenigstens eine 2/2-Wege-Magnetventil (46) einerseits mit dem Ausgang (8) des Betriebsbremsventils (4) und andererseits mit einem ersten Anschluss (42) der Ventileinrichtung (40) verbunden ist, **dadurch gekennzeichnet, dass** das wenigstens eine 2/2-Wege-Magnetventil (46) und die Ventileinrichtung (40) von einer Steuereinrichtung (34) derart steuerbar sind, dass
d) zur Antriebsschlupfregelung das 2/2-Wege-Magnetventil (46) in Durchlassstellung und die Ventileinrichtung (40) in die erste Schaltstellung geschaltet wird, und
e) um auf der Basis des Druckmittels aus dem Druckmittelvorrat (12) in dem wenigstens einen Bremsaktuator (30) einen Bremsdruck in vorbestimmter Höhe zu erzeugen, das 2/2-Wege-Magnetventil (46) in Sperrstellung und die Ventileinrichtung (40) in die erste Schaltstellung geschaltet wird.

2. Bremsanlage nach Anspruch 1, **dadurch gekennzeichnet, dass** der Ventileinrichtung (40) und dem wenigstens einen Bremsaktuator (30) wenigstens ein von der Steuereinrichtung (34) gesteuertes ABS-Drucksteuerventil (28) zwischengeordnet ist.

3. Bremsanlage nach Anspruch 2, **dadurch gekennzeichnet, dass** zur Antriebsschlupfregelung das wenigstens eine ABS-Drucksteuerventil (28) getaktet gesteuert wird, um auf der Basis eines von der Ventileinrichtung (40) aus dem Druckmittelvorrat (12) in das wenigstens eine ABS-Drucksteuerventil (28) eingesteuerten Drucks den Antriebschlupf an einen vorgegebenen Antriebsschlupf anzupassen.

4. Bremsanlage nach einem der vorhergehenden Ansprüche, **gekennzeichnet durch** eine Haltestellenbremse mit einem Haltestellenbremsbetätigungsorgan (38), auf dessen Betätigung **durch** den Fahrer hin Bremsaktuatoren (30) wenigstens einer Achse (2a) mit einem vorbestimmten Haltestellenbremsdruck zugespannt werden und zum Haltstellenbremsen das wenigstens eine 2/2-Wege-Magnetventil (46) in Sperrstellung und die Ventileinrichtung (40) von der Steuereinrichtung (34) zwischen der ersten Schaltstellung und der zweiten Schaltstellung getaktet geschaltet wird, um auf der Basis des Drucks des Druckmittels aus dem Druckmittelvorrat (12) den vorbestimmten Haltestellenbremsdruck in den Bremsaktuatoren (30) der wenigstens einen Achse (2a) zu erzeugen.

5. Bremsanlage nach einem der vorhergehenden Ansprüche, **gekennzeichnet durch** eine in der Steuereinrichtung (34) implementierte Anfahrhilfefunktion, bei der ein **durch** den Fahrer zum Einbremsen des Fahrzeugs erzeugter Bremsdruck ohne weitere Betätigung des Betriebsbremsventils (4) wenigstens über einen gewissen Zeitraum gehalten wird, wobei für die Anfahrhilfe das 2/2-Wege-Magnetventil (46) in Sperrstellung geschaltet wird.

6. Bremsanlage nach Anspruch 5, **dadurch gekennzeichnet, dass** die Ventileinrichtung (40) zwischen der ersten Schaltstellung und der zweiten Schaltstellung getaktet geschaltet wird, um auf der Basis des Drucks des Druckmittels aus dem Druckmittelvorrat (12) in wenigstens einem Bremsaktuator (30) wenigstens den zuletzt vom Fahrer erzeugten Bremsdruck zu über den gewissen Zeitraum zu halten.

7. Bremsanlage nach den Ansprüchen 2 und 4, 5 oder 6, **dadurch gekennzeichnet, dass** zum Haltstellenbremsen oder zur Anfahrhilfe das wenigstens eine ABS-Drucksteuerventil (28) von der Steuereinrichtung (34) angesteuert ist, dass es in Durchlassstellung geschaltet ist.

8. Bremsanlage nach einem der vorhergehenden Ansprüche, **dadurch gekennzeichnet, dass** zum Druckabbau in dem wenigstens einen Bremsaktuator (30) das wenigstens eine 2/2-Wege-Magnetventil (46) von der Steuereinrichtung (34) getaktet gesteuert und die Ventileinrichtung (40) in die zweite Schaltstellung schaltbar ist.

9. Bremsanlage nach einem der vorhergehenden Ansprüche, **dadurch gekennzeichnet, dass** zwischen dem Ausgang (8) des Betriebsbremsventils (4) und dem wenigstens einen Bremsaktuator (30) eine das 2/2-Wege-Magnetventil (46) und die Ventileinrichtung (40) überbrückende Bypassverbindung (54) vorgesehen ist, in welche wenigstens ein Rückschlagventil (56) derart geschaltet ist, dass es zum Ausgang (8) des Betriebsbremsventils (4) hin schließt und zu dem wenigstens einen Bremsaktuator (30) hin öffnet.

10. Bremsanlage nach einem der vorhergehenden Ansprüche, **dadurch gekennzeichnet, dass** der Ventileinrichtung (40) und dem wenigstens einen Bremsaktuator (30) ein Relaisventil (58) zwischengeordnet ist, welches steuerseitig mit der Ventileinrichtung (40) verbunden ist.

11. Bremsanlage nach einem der vorhergehenden Ansprüche, **dadurch gekennzeichnet, dass** die Ventileinrichtung (40) durch ein 3/2-Wege-Magnetventil gebildet wird, wobei der erste Anschluss (42) mit dem 2/2-Wege-Magnetventil (46), ein zweiter Anschluss (48) mit dem Druckmittelvorrat (12) und ein dritter Anschluss (50) mittelbar oder unmittelbar mit dem wenigstens einen Bremsaktuator (30) verbunden ist.

12. Bremsanlage nach Anspruch 11, **dadurch gekennzeichnet, dass** das 2/2-Wege-Magnetventil (46) gemäß der Durchlassstellung eine Verbindung zwischen dem ersten Anschluss (42) des 3/2-Wege-Magnetventils (40) und dem Ausgang (8) des Betriebsbremsventils (4) schafft und in der Sperrstellung diese Verbindung sperrt.

13. Bremsanlage nach einem der vorhergehenden Ansprüche, **dadurch gekennzeichnet, dass** das 2/2-Wege-Magnetventil (46) und die Ventileinrichtung (40) in einem gemeinsamen Gehäuse untergebracht sind und durch ein einziges Ventil gebildet werden.

## Claims

1. A traction-controlled brake system (1) of a vehicle with
a) a service brake valve (4), which generates an actuation-dependent pressure at at least one output (8) in response to an actuation,
b) a valve device (40), which, in accordance with a first operating position, indirectly or directly connects a pressure medium reservoir (12) and, in accordance with a second operating position, indirectly or directly connects at least one 2/2-way solenoid valve (46) to at least one brake actuator (30), wherein
c) the at least one 2/2-way solenoid valve (46) is connected, on the one hand, to the output (8) of the service brake valve (4) and, on the other hand, to a first port (42) of the valve device (40),
**characterized in that** the at least one 2/2-way solenoid valve (46) and the valve device (40) can be controlled by a control unit (34) in such a way that,
d) for the purpose of traction control, the 2/2-way solenoid valve (46) is switched to the throughflow position and the valve device (40) is switched to the first operating position, and
e) in order to generate a brake pressure of a predetermined level in the at least one brake actuator (30) on the basis of the pressure medium from the pressure medium reservoir (12), the 2/2-way solenoid valve (46) is switched to the shutoff position and the valve device (40) is switched to the first operating position.

2. The brake system as claimed in claim 1, **characterized in that** at least one ABS pressure control valve (28) controlled by the control unit (34) is arranged between the valve device (40) and the at least one brake actuator (30).

3. The brake system as claimed in claim 2, **characterized in that**, for traction control, the at least one ABS pressure control valve (28) is controlled cyclically in order to adapt the drive slip to a specified drive slip on the basis of a pressure fed into the at least one ABS pressure control valve (28) from the pressure medium reservoir (12) by the valve device (40).

4. The brake system as claimed in one of the preceding claims, **characterized by** a stopping point brake having a stopping point brake actuating member (38), in response to the actuation of which by the driver brake actuators (30) of at least one axle (2a) are applied with a predetermined stopping point brake pressure and, for stopping point braking, the at least one 2/2-way solenoid valve (46) is switched cyclically to a shutoff position and the valve device (40) is switched cyclically by the control unit (34) between the first operating position and the second operating position in order to generate the predetermined stopping point brake pressure in the brake actuators (30) of the at least one axle (2a) on the basis of the pressure of the pressure medium from the pressure medium reservoir (12).

5. The brake system as claimed in one of the preceding claims, **characterized by** a start assist function implemented in the control unit (34), in which a brake pressure generated by the driver to brake the vehicle is maintained at least for a certain period of time without further actuation of the service brake valve (4), wherein the 2/2-way solenoid valve (46) is switched to the shutoff position for start assist.

6. The brake system as claimed in claim 5, **characterized in that** the valve device (40) is switched cyclically between the first operating position and the second operating position in order to maintain at least the last brake pressure generated by the driver for the certain period of time in at least one brake actuator (30) on the basis of the pressure of the pressure medium from the pressure medium reservoir (12).

7. The brake system as claimed in claims 2 and 4, 5 or 6, **characterized in that**, for stopping point braking or for start assist, the at least one ABS pressure control valve (28) is activated by the control unit (34) in such a way that it is switched to the throughflow position.

8. The brake system as claimed in one of the preceding claims, **characterized in that**, to reduce the pressure in the at least one brake actuator (30), the at least one 2/2-way solenoid valve (46) is controlled cyclically by the control unit (34), and the valve device (40) can be switched to the second operating position.

9. The brake system as claimed in one of the preceding claims, **characterized in that** a bypass connection (54), which bypasses the 2/2-way solenoid valve (46) and the valve device (40) and into which at least one check valve (56) is inserted in such a way that it closes toward the output (8) of the service brake valve (4) and opens toward the at least one brake actuator (30), is provided between the output (8) of the service brake valve (4) and the at least one brake actuator (30).

10. The brake system as claimed in one of the preceding claims, **characterized in that** a relay valve (58) is arranged between the valve device (40) and the at least one brake actuator (30), said relay valve being connected on the control side to the valve device (40).

11. The brake system as claimed in one of the preceding claims, **characterized in that** the valve device (40) is formed by a 3/2-way solenoid valve, wherein the first port (42) is connected to the 2/2-way solenoid valve (46), a second port (48) is connected to the pressure medium reservoir (12), and a third port (50) is connected directly or indirectly to the at least one brake actuator (30) .

12. The brake system as claimed in claim 11, **characterized in that**, in the throughflow position, the 2/2-way solenoid valve (46) creates a connection between the first port (42) of the 3/2-way solenoid valve (40) and the output (8) of the service brake valve (4) and shuts off this connection in the shutoff position.

13. The brake system as claimed in one of the preceding claims, **characterized in that** the 2/2-way solenoid valve (46) and the valve device (40) are accommodated in a common housing and are formed by a single valve.

## Revendications

1. Système de freinage à régulation du glissement de traction (1) d'un véhicule, comprenant
(a) une soupape de frein de service (4), qui, en réponse à l'actionnement, engendre une pression en fonction de l'actionnement à au moins une sortie (8),
(b) un moyen à soupape (40), qui établit une communication entre un réservoir (12) de milieu sous pression en correspondance avec une première position de commande et, en correspondance avec une deuxième position de commande, au moins une électrovanne à 2/2 voies (46) directement ou indirectement et au moins un actionneur de freinage (30), dans lequel
(c) ladite au moins une électrovanne à 2/2 voies (46) est reliée, d'un côté, à la sortie (8) de ladite soupape de frein de service (4) et, d'autre côté, à un premier raccord (42) dudit moyen à soupape,
**caractérisé en ce que** ladite au moins une électrovanne à 2/2 voies (46) et ledit moyen à soupape (40) sont commandable par un moyen de commande (34) d'une telle façon,
(d) que ladite électrovanne à 2/2 voies (46) soit commandée dans sa position de passage et ledit moyen à soupape (40) soit commandée dans sa première position de commande pour la régulation du glissement de traction, et
(e) afin d'engendrer une pression de freinage à un niveau prédéterminé dans ledit au moins un actionneur de freinage (30) à la base du milieu sous pression provenant dudit réservoir de milieu sous pression (12), et que ladite électrovanne à 2/2 voies (46) est commandée dans sa position de blocage et ledit moyen à soupape (40) est commandé dans la première position de commande.

2. Système de freinage selon la revendication 1, **caractérisé en ce qu'**une soupape de pilotage de pression ABS, sous commande dudit moyen de commande (34), est interposée entre ledit moyen à soupape (40) et ledit au moins un actionneur de freinage (30).

3. Système de freinage selon la revendication 2 **caractérisé en ce que** ladite au moins une soupape de commande de pression ABS (28) est commandée de façon cadencée pour la régulation du glissement de traction afin d'adapter le glissement de traction a un glissement de traction prédéterminée sur la base d'une pression commandée par ledit moyen à soupape (40) à partir dudit réservoir de milieu sous pression (12) dans ladite au moins une soupape de commande de pression ABS (28).

4. Système de freinage selon une quelconque des revendications précédentes, **caractérisé par** un frein de point d'arrêt à un élément actionnant le frein de point d'arrêt (38), aux actionneurs de frein (30) à au moins un essieu (2a) étant serrés à une pression prédéterminée de freinage au point d'arrêt en réponse à la commande dudit élément actionnant par le chauffeur, et, pour le freinage au point d'arrêt, à ladite au moins une électrovanne à 2/2 voies (46) étant commandée en sa position de blocage et audit moyen à soupape (40) étant commandé de façon cadencée par ledit moyen de commande (34) entre sa première position de commande et sa deuxième position de commande afin d'engendrer ladite pression prédéterminée de freinage au point d'arrêt dans lesdites actionneurs de frein (30) dudit au moins un essieu (2a) sur la base de la pression dudit milieu sous pression dans ledit réservoir de milieu de pression (12).

5. Système de freinage selon une quelconque des revendications précédentes, **caractérisé par** une fonction d'assistance en démarrage, réalisée dans ledit moyen de commande (34), qui permet le maintien d'une pression de freinage engendrée par le chauffeur pour le freinage du véhicule au moins sur un certain intervalle sans actionnement de ladite soupape de frein de service (4), à ladite électrovanne à 2/2 voies (46) étant commandée en sa position de blocage pour l'assistance en démarrage.

6. Système de freinage selon la revendication 5, **caractérisé en ce que** ledit moyen à soupape (40) est commandé de manière cadencée entre sa première position de commande et sa deuxième position de commande afin de maintenir au moins la pression de freinage engendré en dernier par le chauffeur sur ledit certain intervalle dans ledit au moins un actionneur de frein (30) sur la base de la pression dudit milieu sous pression dudit réservoir de milieu sous pression (12).

7. Système de freinage selon les revendications 2 et 4, 5 ou 6, **caractérisé en ce que** ladite au moins une soupape de commande de pression ABS (28) est pilotée par ledit moyen de commande (34) pour le freinage au point d'arrêt ou pour l'assistance en démarrage, de façon qu'elle soit positionnée en sa position de passage.

8. Système de freinage selon une quelconque des revendications précédentes, **caractérisé en ce que** ladite au moins une électrovanne à 2/2 voies (46) est commandée, de façon cadencée, par ledit moyen de commande (34) pour la réduction de la pression dans ledit au moins un actionneur de frein (30), et **en ce que** ledit moyen à soupape (40) est commandable dans sa deuxième position de commande.

9. Système de freinage selon une quelconque des revendications précédentes, **caractérisé en ce qu'**un raccord de dérivation (54) est disposée entre la sortie (8) de ladite soupape de frein de service (4) et ledit au moins un actionneur de frein (30), qui ponte ladite électrovanne à 2/2 voies (46) et ledit moyen à soupape (40), dans lequel au moins un clapet de non-retour (56) est relié d'une telle façon, qu'il ferme vers la sortie (8) de ladite soupape de frein de service (4) et ouvre vers ledit au moins un actionneur de frein (30).

10. Système de freinage selon une quelconque des revendications précédentes, **caractérisé en ce qu'**une soupape-relais (58) est interposée entre ledit moyen à soupape (40) et ledit au moins un actionneur de frein (30), qui, du côté de commande, est relié audit moyen à soupape (40).

11. Système de freinage selon une quelconque des revendications précédentes, **caractérisé en ce que** ledit moyen à soupape (40) est constitué par une électrovanne à 3/2 voies, au premier raccord (42) étant relié à ladite électrovanne à 2/2 voies (46), à un deuxième raccord (48) étant relié audit réservoir de milieu sous pression (12) et à un troisième raccord (50) étant indirectement ou directement relié audit au moins un actionneur de frein (30).

12. Système de freinage selon la revendication 11, **caractérisé en ce que** ladite électrovanne à 2/2 voies (46) établit, en correspondance avec la position de passage, une communication entre ledit premier raccord (42) de ladite électrovanne à 3/2 voies (40) et la sortie (8) de ladite soupape de frein de service (4) et, en sa position de blocage, bloque cette communication.

13. Système de freinage selon la revendication 11, **caractérisé en ce que** ladite électrovanne à 2/2 voies (46) et ledit moyen à soupape (40) sont accommodés dans un carter commun et sont constitué par une seule soupape.
